# FASCICULE DE BREVET EUROPEEN

(11) **EP 2 380 809 B1**
(45) Date de publication et mention de la délivrance du brevet: **22.08.2012**
(21) Numéro de dépôt: 11002901.4
(22) Date de dépôt: 07.04.2011
(51) Int. Cl.: B64C 25/00, B64C 27/04

(54) **Système à absorption d'énergie pour un atterrisseur, et aéronef muni dudit système à absorption d'énergie**
Energieabsorptionssystem für ein Fahrwerk, und mit einem solchen Energieabsorptionssystem ausgestattetes Luftfahrzeug
Energy absorption system for landing gear, and aircraft equipped with said energy absorption system

(30) Priorité: 26.04.2010 FR 1001776
(43) Date de publication de la demande: 26.10.2011
(73) Titulaire: EUROCOPTER, 13725 Marignane Cédex (FR)
(72) Inventeur: Mairou, Joseph, 13127 Vitrolles (FR); Bertin, Didier, 13009 Marseille (FR); Lassus, Vincent, 84220 Saint Pantaleon (FR); Nicola, Jean, 13290 Aix les Milles (FR)
(74) Mandataire: GPI & Associés

(56) Documents cités:
- EP-A1- 1 717 144
- FR-A1- 2 684 957
- FR-A1- 2 885 596

## Description

La présente invention concerne un système à absorption d'énergie pour un atterrisseur et un aéronef muni dudit système à absorption d'énergie.

Classiquement, un aéronef comporte un train d'atterrissage à l'aide duquel il repose sur le sol. Par exemple, le train d'atterrissage est pourvu de trois ou quatre atterrisseurs à roues qui constituent un polygone de sustentation de l'aéronef au sol. On connaît aussi des atterrisseurs munis de patins.

Ces atterrisseurs peuvent être escamotables pour optimiser la traînée aérodynamique de l'aéronef. En effet, on replie à l'intérieur du fuselage les éléments de l'aéronef les plus proéminents, et notamment dans ce cas les trains d'atterrissage escamotables. Plus précisément, on escamote chaque atterrisseur en vol dans un compartiment dénommé classiquement « case de train », pour le déployer au moment requis lors de l'atterrissage

Les règlements de certification civils connus par exemple sous les acronymes « FAR », « JAR » ou « EASA-CS » dénommé « European Aviation Safety Agency Certification Specification » en langue anglaise imposent des niveaux d'absorption d'énergie cinétique aux atterrisseurs.

Ainsi, selon ces règlements de certification civils, un atterrisseur doit absorber l'énergie cinétique d'un aéronef ayant une première vitesse verticale prédéterminée d'impact au sol sans déformation permanente des composants constituant cet atterrisseur, pour différentes attitudes de l'aéronef lors du posé et pour les conditions de masse et de centrage les plus défavorables. De même, chaque atterrisseur doit absorber l'énergie cinétique d'un aéronef ayant une deuxième vitesse verticale prédéterminée d'impact au sol supérieure à ladite première vitesse sans rupture des composants constituant cet atterrisseur, pour différentes attitudes de l'aéronef lors du posé et pour les conditions de masse et de centrage les plus défavorables.

Dès lors, un atterrisseur adapté aux règlements de certification civils et dénommé par commodité « atterrisseur standard » comporte souvent un amortisseur d'un premier type, dénommé premier amortisseur par commodité.

Par exemple, un atterrisseur standard peut être muni d'un balancier s'étendant d'une première zone extrémale vers une deuxième zone extrémale supportant une ou plusieurs roues, la première zone extrémale étant articulée à un premier flanc d'une case de train.

De plus, l'atterrisseur comporte un système à absorption d'énergie pourvu d'un premier amortisseur de type oléopneumatique. Le premier amortisseur est articulé d'une part au balancier et d'autre part à un deuxième flanc de la case de train. Le premier amortisseur peut être sensiblement vertical à savoir dirigé selon une direction sensiblement perpendiculaire au sol lorsque l'aéronef est posé sur ce sol et sensiblement parallèle aux premier et deuxième flancs. Cette position de l'amortisseur peut cependant être orienté de manière différente (que vertical) pour des raisons d'intégration/de compatibilité avec la structure sur laquelle il doit se connecter.

Un tel premier amortisseur comporte un piston coulissant dans un corps principal dont la tête est en contact avec une première chambre remplie d'huile et équipée d'orifices de laminage permettant d'absorber l'énergie lors d'un atterrissage. De plus, l'amortisseur comprend une deuxième chambre remplie de gaz pour sustenter l'aéronef en situation statique. Cette deuxième chambre communique avec la première chambre, la deuxième chambre ayant un volume qui se réduit lorsque le premier amortisseur se comprime pour participer à l'absorption d'énergie lors d'un atterrissage.

Le premier amortisseur peut, éventuellement, aussi permettre la rétraction du balancier dans la case de train.

Le document FR 2684957 présente un tel atterrisseur standard.

Ces atterrisseurs standards sont très efficaces et permettent de satisfaire les exigences des règlements de certification civils.

Cependant, on comprend que les atterrisseurs standards ne sont parfois pas adaptés à des vitesses verticales d'impact au sol supérieures aux vitesses définies par la réglementation civile.

Par ailleurs, outre les règlements de certification civils, il existe des règlements de qualification militaires connus par exemple sous la dénomination « MIL-S-8698 », des règlements de qualification navale connus par exemple sous la dénomination « AR56 » et des règlements de qualification militaires de crash connus par exemple sous la dénomination « MIL-STD-1290 » qui sont plus contraignants que les règlements de certifications civils.

Ces règlements de qualification militaires « MIL-S-8698 » et navales « AR56 » imposent des vitesses verticales plus élevées que les première et deuxième vitesses verticales précédentes. Les règlements de qualification militaires de crash MIL-STD-1290 imposent des vitesses verticales encore plus élevées que celles présentées ci-dessus et définissent le comportement des atterrisseurs en terme d'intégrité et d'absorption d'énergie jusqu'au contact du fuselage avec le sol.

Les atterrisseurs adaptés aux règlements de qualification militaires, navales et militaires de crash sont dénommés par commodité « atterrisseur à haut niveau d'absorption ». Un atterrisseur à haut niveau d'absorption se distingue par exemple d'un atterrisseur standard en comportant souvent un système à absorption d'énergie pourvu d'un amortisseur d'un deuxième type, dénommé deuxième amortisseur par commodité. Ce deuxième amortisseur est muni d'un piston dont la course disponible est plus importante que la course d'un premier amortisseur d'un atterrisseur standard.

De plus, un deuxième amortisseur d'un atterrisseur à haut niveau d'absorption peut avoir de multiples chambres remplies de gaz et des orifices de laminage évolutifs notamment.

Le deuxième amortisseur d'un atterrisseur à haut niveau d'absorption est alors souvent plus encombrant, plus lourd et plus onéreux que le premier amortisseur d'un atterrisseur standard.

En effet, le contrôle des efforts générés par le deuxième amortisseur peut être intégré dans un premier amortisseur par des orifices de laminage évolutifs ou multiples sans pénalité importante sur le coût ou la masse. Par contre, une course étendue du piston induit une augmentation de la dimension de la case de train et un éloignement des points d'attache de l'amortisseur ce qui génère des surcoûts et des masses importantes. De plus, l'augmentation de la case de train n'est pas toujours possible pour des raisons d'intégration/de comptabilité avec d'autres équipements.

On note que le document FR 2885596 présente un atterrisseur muni d'un balancier et d'un moyen de freinage de ce balancier. Aussi le document EP 1717144 montre un atterriseur muni d'un système d'absortion d'énergie avec toutes les caractéristiques du préambule de la revendication 1.

La présente invention a alors pour objet de proposer un système à absorption d'énergie pour atterrisseur ayant un encombrement minimisé et adapté à des vitesses verticales d'impact au sol supérieures ou égales aux vitesses définies par les règlements de certification civils.

Selon l'invention, un système à absorption d'énergie est pourvu d'un amortisseur s'étendant d'une première extrémité apte à être liée à un balancier d'un atterrisseur logé dans une case de train vers une deuxième extrémité. Ce système à absorption d'énergie est remarquable en ce qu'il comporte une ferrure reliée à la deuxième extrémité et un moyen de guidage de la ferrure, le système à absorption d'énergie comprenant un moyen d'absorption d'énergie déformable fixé à la ferrure et apte à être fixé à une structure de la case ainsi qu'un moyen d'immobilisation fusible apte à fixer la ferrure audit flanc, le moyen d'immobilisation fusible se rompant à partir d'un seuil prédéterminé pour autoriser un déplacement de ladite ferrure guidé par le moyen de guidage pour engendrer une déformation du moyen d'absorption d'énergie.

Ainsi, on peut utiliser un amortisseur du premier type et obtenir des performances supérieures aux performances exigées par les règlements de certification civils sans une modification notable de la case de train.

En effet, en dessous du seuil prédéterminé, le moyen d'immobilisation fusible immobilise la ferrure dans une position de repos. Le système à absorption d'énergie fonctionne alors comme un système à absorption d'énergie d'un atterrisseur standard. Par contre, à partir dudit seuil prédéterminé à savoir une vitesse verticale d'impact prédéfinie supérieure à la deuxième vitesse verticale et éventuellement de 4 mètres par seconde, le moyen d'immobilisation fusible cède et libère la ferrure. Cette ferrure se déplace en étant guidée par le moyen de guidage et exerce un effort sur le moyen d'absorption d'énergie déformable. La déformation du moyen d'absorption d'énergie déformable permet alors d'absorber l'énergie résultant de l'impact.

Selon d'autres aspects, l'invention peut comporter au moins une des caractéristiques additionnelles qui suivent.

Selon un premier mode de réalisation, la ferrure effectue une translation le long d'une droite après la rupture du moyen d'immobilisation fusible.

Selon une première variante du premier mode de réalisation préféré, le moyen de guidage comporte deux glissières coopérant avec un rail mobile de la ferrure. L'adjectif mobile qualifie le rail de la ferrure dans la mesure où ce rail de la ferrure glisse entre les deux glissières du moyen de guidage lorsque le moyen d'immobilisation fusible est rompu.

De plus, le moyen d'immobilisation est fixé d'une part à la ferrure et d'autre part au flanc. Par exemple, le moyen d'immobilisation est un pion solidaire de la ferrure puis traverse un orifice du flanc pour y être fixé par un moyen de vissage par exemple. Ce pion comporte alors une zone fragilisée pour se rompre au-delà dudit seuil prédéterminé, la zone fragilisée ayant éventuellement une section dont les dimensions sont inférieures aux dimensions des autres sections du pion.

Le moyen d'immobilisation peut comprendre une plaque rivetée dimensionnée afin que ladite plaque ou les rivets de cette plaque cèdent à partir dudit seuil prédéterminé.

Selon une deuxième variante du premier mode de réalisation alternatif, le moyen de guidage comporte un rail fixe en forme de T apte à être fixé à un flanc d'une case de train coopérant avec une glissière mobile de la ferrure. L'adjectif « fixe » est associé au rail en forme de T dans la mesure où selon cette deuxième variante du premier mode de réalisation, la glissière se déplace par rapport au rail lorsque le moyen d'immobilisation fusible cède.

On note que le rail fixe étant fixé à la case de train, le moyen d'immobilisation peut être fixé d'une part à la ferrure et d'autre part au rail fixe.

Par exemple, le moyen d'immobilisation est un pion solidaire du rail et traverse un orifice de la ferrure pour y être fixé par un moyen de vissage par exemple. A l'instar de l'exemple du premier mode de réalisation décrit précédemment, ce pion peut alors comporter une zone fragilisée pour se rompre au-delà dudit seuil prédéterminé.

De la sorte, la première variante du premier mode de réalisation met en oeuvre deux glissières fixes solidarisées à un panneau de la case de train et un rail mobile solidaire de la ferrure alors qu'à l'inverse, la deuxième variante du premier mode de réalisation met en oeuvre un rail fixe solidarisé à un panneau de la case de train et une glissière mobile solidaire de la ferrure.

Selon un deuxième mode de réalisation, la ferrure effectue un mouvement rotatif.

Dès lors, le moyen de guidage comprend un moyen de liaison prolongeant la ferrure, ce moyen de liaison étant articulé à un axe de rotation qui est apte à être lié audit balancier, le moyen d'immobilisation étant fixé d'une part à la ferrure et d'autre part au flanc. L'axe de rotation peut aussi être un axe autour duquel le balancier effectue une rotation, cet axe de rotation étant muni d'un unique organe ou d'une pluralité d'organes.

Par ailleurs, quel que soit le mode de réalisation, la ferrure comportant optionnellement deux joues de fixation, la deuxième extrémité de l'amortisseur est disposée entre les joues, un axe de fixation traversant lesdites joues et la deuxième extrémité. Avantageusement, l'amortisseur comporte une liaison à rotule fixée entre lesdites joues par l'axe de fixation.

Dès lors, le moyen d'absorption d'énergie déformable peut être fixé à l'axe de fixation.

De plus; ce moyen d'absorption d'énergie déformable comporte optionnellement au moins une sangle, cette sangle absorbant l'énergie résultant de l'impact par déchirure de ces coutures, par exemple. La sangle peut être en matériaux composites.

Selon une variante, la sangle a une forme de Y en comprenant une branche inférieure apte à être fixée à une structure, telle que le flanc de la case de train auquel est fixée la ferrure. Cette branche inférieure est alors prolongée par deux branches supérieures fixées à la ferrure, par exemple de part et d'autre d'un axe de fixation de la ferrure permettant la solidarisation de la deuxième extrémité de l'amortisseur.

Selon une autre variante, le moyen d'absorption d'énergie déformable comporte deux sangles par exemple.

Outre un système à absorption d'énergie, l'invention vise un aéronef muni d'un train d'atterrissage comportant au moins un atterrisseur disposé dans une case de train, cet atterrisseur ayant un balancier articulé à une paroi de la case de train et supportant au moins un organe de contact, l'atterrisseur ayant un système à absorption d'énergie pourvu d'un amortisseur s'étendant d'une première extrémité liée au balancier vers une deuxième extrémité. Le système à absorption d'énergie est alors un système à absorption d'énergie selon l'invention tel que décrit précédemment.

Ainsi, ce système à absorption d'énergie comprend notamment une ferrure reliée à la deuxième extrémité et un moyen de guidage en translation de la ferrure fixé à un flanc de la case de train, le système à absorption d'énergie comprenant aussi un moyen d'absorption d'énergie déformable reliant la ferrure à une structure de la case ainsi qu'un moyen d'immobilisation fusible fixant la ferrure au flanc indifféremment soit directement ou soit indirectement via un rail fixe agencé sur le flanc, le moyen d'immobilisation fusible se rompant à partir d'un seuil prédéterminé pour autoriser un glissement de la ferrure par rapport au moyen de guidage engendrant une déformation du moyen d'absorption d'énergie.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef muni d'un système à absorption d'énergie selon un premier mode de réalisation de l'invention,
- la figure 2, une vue montrant ledit système à absorption d'énergie selon le premier mode de réalisation,
- la figure 3, une coupe explicitant une première variante du premier mode de réalisation,
- la figure 4, un schéma explicitant une deuxième variante du premier mode de réalisation,
- la figure 5 une vue montrant une variante du moyen d'absorption d'énergie, et
- les figures 6 et 7 des vues montrant ledit système à absorption d'énergie selon un deuxième mode de réalisation.

Les éléments présents dans plusieurs figures distinctes sont affectés d'une seule et même référence.

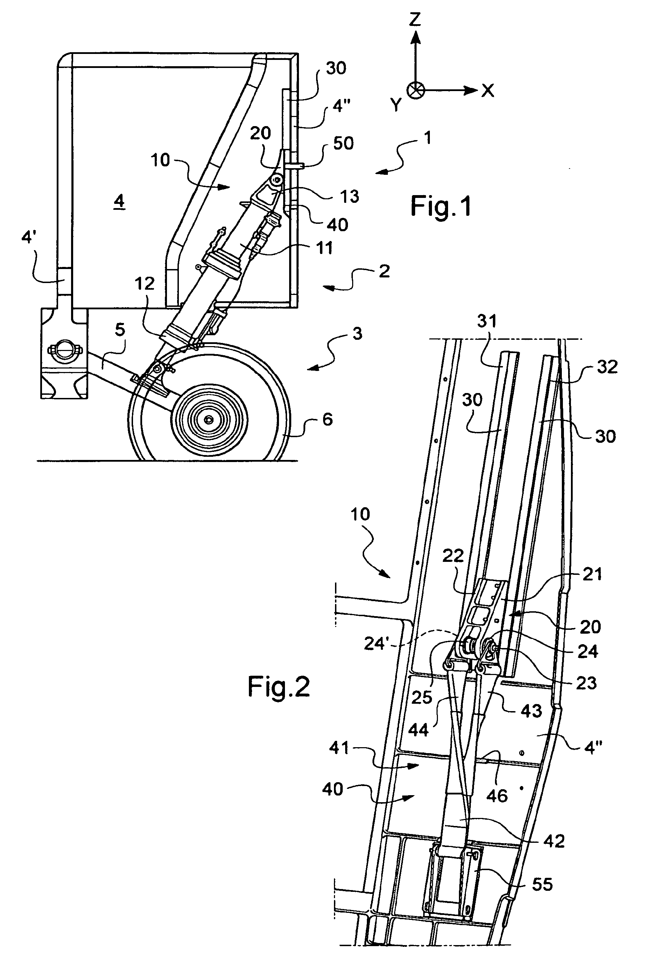

Les figures 1 à 5 présentent un premier mode de réalisation de l'invention.

La figure 1 présente un aéronef 1 muni d'un train d'atterrissage 2 comportant au moins un atterrisseur 3 agencé dans une case de train 4.

On note que trois directions X, Y et Z orthogonales les unes par rapport aux autres sont représentées sur la figure 1.

La direction X est dite longitudinale. Le terme « longueur » est relatif à une dimension longitudinale du dispositif selon cette direction longitudinale X.

Une autre direction Y est dite transversale. Le terme « largeur » est relatif à une dimension transverse du dispositif selon cette direction transversale.

Enfin, une troisième direction Z est dite d'élévation et correspond aux dimensions en hauteur des structures décrites. Le terme « épaisseur » est alors relatif à une dimension en élévation du dispositif selon cette direction d'élévation.

Un premier plan XY est alors dit « horizontal » alors qu'un deuxième plan YZ et un troisième plan XZ sont dits « verticaux ».

L'atterrisseur 3 est pourvu d'un balancier 5 supportant un organe de contact 6 tel qu'une roue ou un patin par exemple, le balancier étant articulé à une paroi 4' verticale dirigée parallèlement au deuxième plan YZ pour délimiter la case de train 4.

L'atterrisseur 3 comprend alors un système 10 à absorption d'énergie pour notamment absorber l'énergie cinétique de l'aéronef 1 lors d'un atterrissage.

Ce système 10 à absorption d'énergie est muni d'un amortisseur 11 s'étendant d'une première extrémité 12 vers une deuxième extrémité 13, la première extrémité étant articulée au balancier 5. Plus précisément, la première extrémité est agencée entre la première zone extrémale du balancier 5 articulée à la paroi 4' et la deuxième zone extrémale du balancier 5 supportant l'organe de contact 6.

L'amortisseur est sensiblement agencé verticalement selon une direction parallèle à la direction en élévation Z soit sensiblement parallèle à la paroi 4'. Néanmoins, cet amortisseur 11 pourrait être horizontal et sensiblement parallèle à la direction longitudinale X.

L'amortisseur est par exemple un amortisseur oléopneumatique du premier type décrit précédemment, optimisé par la présence d'orifices de laminage évolutifs ou multiples.

De plus, le système 10 à absorption d'énergie comprend un moyen de fixation de la deuxième extrémité 13 de l'amortisseur 11 à l'aéronef 1 et notamment aux organes délimitant la case de train 4. En effet, le système 10 à absorption d'énergie est pourvu d'une ferrure 20, la deuxième extrémité 13 étant articulée à cette ferrure 20.

La ferrure 20 coopère avec un moyen de guidage 30 en translation fixé à un flanc 4" de la case de train 4, ce flanc 4" étant parallèle à la paroi 4' et parallèle au deuxième plan YZ. Il est à noter que le flanc 4" peut être sensiblement parallèle au premier plan XY ou au troisième plan XZ sans sortir du cadre de l'invention.

En outre, la ferrure 20 coopère avec un moyen d'absorption d'énergie 40 déformable fixé à une structure de la case de train 4. Par exemple, cette structure peut être le flanc 4" de la case de train 4 ou un autre organe de cette case de train 4.

Par ailleurs, un moyen d'immobilisation 50 fusible maintient dans une position de repos la ferrure 20 en dessous d'un seuil prédéterminé, une vitesse de 4 mètres par seconde par exemple. Le moyen d'immobilisation 50 verrouille donc géométriquement la ferrure 20 dans une position de repos en fixant cette ferrure 20 au flanc 4", indifféremment soit directement à savoir sans organe intermédiaire ou soit indirectement par l'emploi d'au moins un organe intermédiaire.

A partir du seuil prédéterminé, le moyen d'immobilisation 50 fusible rompt et libère la ferrure qui glisse par rapport au flanc 4" en étant guidée par le moyen de guidage 30. Durant sa translation, la ferrure 20 exerce un effort sur le moyen d'absorption d'énergie 40 déformable, ce moyen d'absorption d'énergie 40 déformable pouvant être un organe métallique qui se déploie ou encore une sangle qui se découd par exemple.

Le moyen d'immobilisation 50 présenté est un pion. Néanmoins, il pourrait par exemple comprendre des rivets immobilisant de manière réversible la ferrure, les rivets se rompant à partir d'un seuil prédéterminé. De tels rivets peuvent coopérer directement avec la ferrure ou via une plaque intermédiaire par exemple.

La figure 2 présente le moyen de fixation du système 10 à absorption d'énergie.

La ferrure comporte une première joue 21 et une deuxième 22 joue latérales de fixation délimitant un espace interne apte à accueillir l'articulation de la deuxième extrémité 13 de l'amortisseur 11.

A cet effet, la ferrure 20 possède une douille 25 allant de la première joue 21 à la deuxième joue 22, deux bobines 24, 24' étant plaquées de part et d'autre de la douille 25.

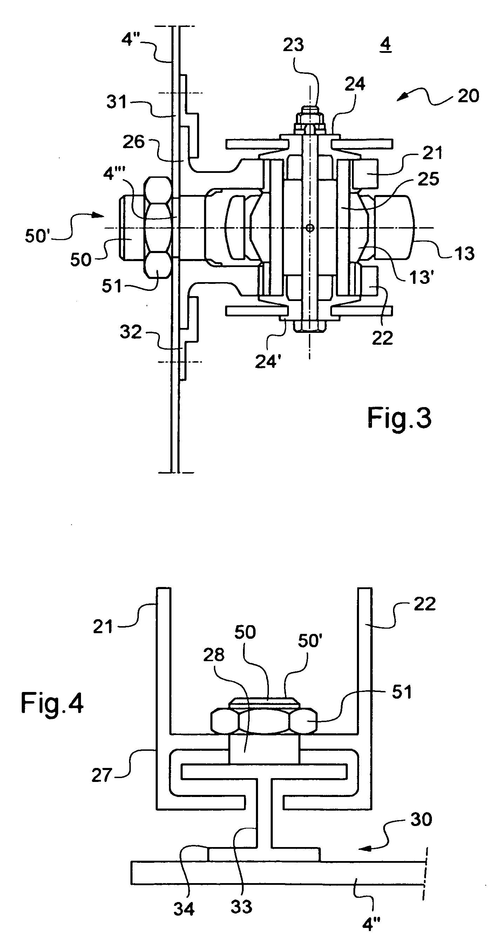

Pour fixer l'amortisseur 11, en référence à la figure 3, on dispose la deuxième extrémité de l'amortisseur 11 entre la première joue 21 et la deuxième joue 22, puis on traverse successivement la première joue 21, un orifice d'une articulation à rotule de la deuxième extrémité puis la deuxième joue 22 à l'aide de la douille 25.

Dès lors, on positionne les première et deuxième bobines 24, 24' contre respectivement la première joue 21 et la deuxième joue 22, la douille 25 étant enserrée entre ces première et deuxième bobines 24. On met alors en oeuvre un axe de fixation 23 pour finaliser le montage. L'axe de fixation traverse donc la première bobine 24, la première joue 21, la douille 25, la deuxième extrémité 13, la deuxième joue 22, et la deuxième bobine 24'.

En référence à la figure 2, le moyen d'absorption d'énergie 40 est fixé d'une part au flanc 4" par un moyen d'attache 55 et d'autre part à cette ferrure 20. Plus précisément, le moyen d'absorption d'énergie 40 est fixé à l'axe de fixation 23 en étant attaché aux première et deuxième bobines 24, 24' sur l'exemple représenté. Toutefois, le moyen d'absorption d'énergie 40 peut être fixé à d'autres organes de la ferrure.

Le moyen d'absorption d'énergie 40 schématisé est une sangle 41, optionnellement en matériaux composites, mais pourrait avoir d'autres caractéristiques telles qu'un organe métallique en forme de serpentin par exemple. Cette sangle 41 a une forme de Y de manière à posséder une branche inférieure 42 solidarisée au moyen d'attache 55, cette branche inférieure 42 étant prolongée d'une part via une première branche supérieure 43 fixée à l'axe de fixation 23 par la première bobine 24 et d'autre part via une deuxième branche supérieure 44 fixée à l'axe de fixation 23 par la deuxième bobine 24'.

Les figures 2 et 3 présentent une première variante d'un premier mode de réalisation du moyen de guidage 30.

Selon cette première variante du premier mode de réalisation, le moyen de guidage 30 comporte une première glissière 31 fixe et une deuxième glissière 32 fixe. La première glissière 31 et la deuxième glissière 32 sont dites « fixes » dans la mesure où cette première glissière 31 et cette deuxième glissière 32 ne sont pas à même de se déplacer. En effet, la première glissière 31 et la deuxième glissière 32 sont solidarisées au flanc 4" par des moyens de solidarisation usuels à savoir par soudure, collage ou encore vissage, par exemple.

En référence à la figure 3, la ferrure 20 comporte alors un rail mobile 26 engagé dans la première glissière 31 et la deuxième glissière 32. Le rail 26 est dit « mobile » dans la mesure où il est apte à glisser par rapport aux première et deuxième glissières 31, 32.

Par ailleurs, le moyen d'immobilisation 50 fusible est solidaire de la ferrure 20. Ce moyen d'immobilisation 50 possède un pion qui comprend une partie filetée 50' traversant un orifice 4"' du flanc 4", un écrou étant vissé sur ladite partie filetée 50'. Dans sa position de repos, la ferrure est donc bloquée en étant fixée au flanc 4" directement par le pion du moyen d'immobilisation 50 fusible.

D'autres réalisations sont possibles tels que des rivets fusibles reliant la ferrure prolongée par une pièce à une paroi. Il est possible que ce soit cette même pièce métallique qui comporte une zone d'affaiblissement localisé jouant le rôle de fusible.

La figure 4 présente une deuxième variante du premier mode de réalisation. Selon cette deuxième variante du premier mode de réalisation, le moyen de guidage comprend un rail fixe 33 en forme T fixé par une base 34 au flanc 4". L'ensemble comprenant le rail fixe 33 et la base 34 a dès lors une forme de H, cet ensemble pouvant être réalisé d'un seul tenant et fixé au flanc 4" par des moyens d'accrochage usuels. Toutefois, le rail fixe peut aussi être soudé au flanc 4" et ne pas nécessiter l'emploi d'une base.

Le rail 33 est dit « fixe » dans la mesure où ce rail n'est pas à même de se déplacer lorsqu'il est fixé au flanc 4".

La ferrure 20 possède alors une glissière mobile 27 coopérant avec le rail fixe 33.

Par ailleurs, selon ce mode de réalisation, la ferrure 20 peut être fixée indirectement au flanc 4" via le rail fixe 33.

Par exemple, un pion moyen d'immobilisation 50 est solidaire du rail fixe 33, une partie filetée 50' traversant un orifice 28 de la ferrure 20, un écrou étant vissé sur ladite partie filetée 50'. Dans sa position de repos, la ferrure est donc bloquée en étant fixée au flanc 4" indirectement par le pion du moyen d'immobilisation 50 fusible.

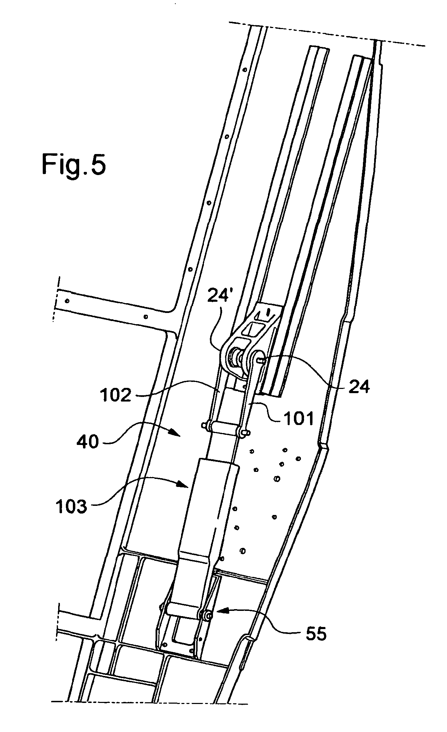

La figure 5 présente un moyen d'absorption d'énergie 40 muni de deux attaches 101, 102 fixées respectivement à l'axe de fixation 23 par la première bobine 24 et par la deuxième bobine 24'.

De plus, les deux attaches 101, 102 sont fixées au moyen d'attache 55 via une sangle 103 représentée sur la figure 5. Ainsi, la sangle est fixée d'une part au moyen d'attache par un premier axe et d'autre part aux attaches 101, 102 par un deuxième axe.

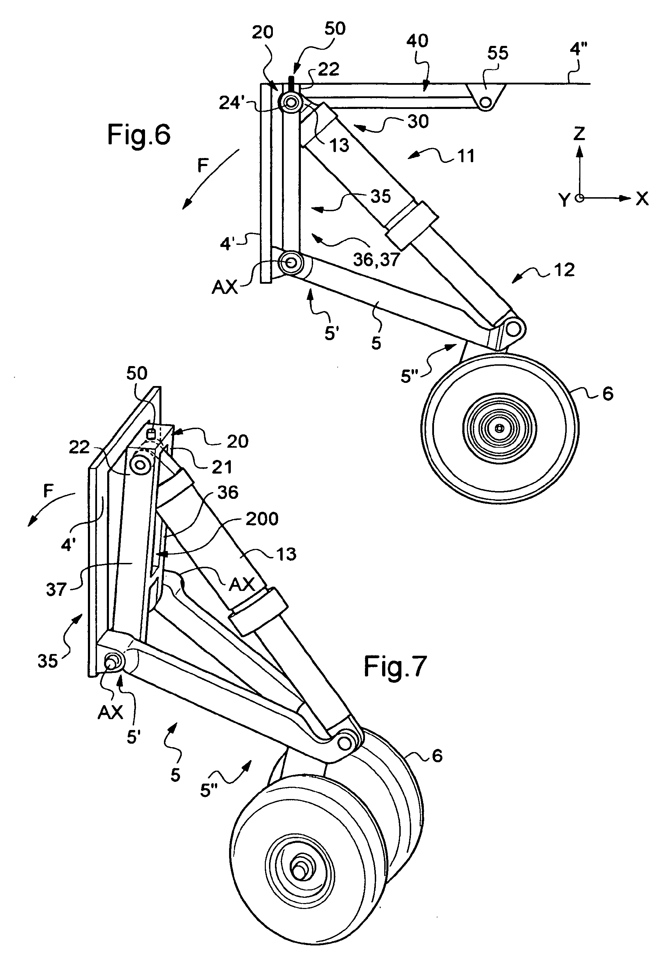

Les figures 6 à 7 présentent un deuxième mode de réalisation selon lequel la ferrure 20 effectue non plus une translation longitudinale suite à la rupture du moyen d'immobilisation 50 mais une rotation autour de l'axe de rotation AX du balancier.

En référence aux figures 6 et 7, le balancier s'étend en effet d'une première zone extrémale 5' vers une deuxième zone extrémale 5".

La première zone extrémale 5' est alors articulée à un axe de rotation AX de la paroi 4' afin de pouvoir effectuer une rotation autour de cet axe de rotation AX. On note sur la figure 7 que le balancier peut comporter deux bras articulés à deux organes distincts de l'axe de rotation AX.

La deuxième zone extrémale 5" porte le ou les organes de contact 6, cette deuxième zone extrémale 5" étant de plus fixée à la première extrémité 12 de l'amortisseur 11.

Conformément au premier mode de réalisation, la deuxième extrémité 13 de l'amortisseur est fixée à une ferrure 20 par les moyens précités par exemple, cette ferrure 20 étant fixée de manière réversible à un flanc 4"par un moyen d'immobilisation 50, tel qu'un pion 50 fusible. On note que le flanc 4" est parallèle au premier plan XY.

De plus, le système à absorption d'énergie est pourvu d'un moyen d'absorption d'énergie 40 déformable fixé à la ferrure 20 et à une structure 4" de la case 4. Ce moyen d'absorption d'énergie 40 peut posséder une ou plusieurs sangles du type précité par exemple.

Par ailleurs, le système à absorption d'énergie est muni d'un moyen de guidage 30 de la ferrure 20 pour guider cette ferrure 20 dans un mouvement rotatif selon la flèche F en cas de rupture du moyen d'immobilisation 50 fusible, le pion schématisé par exemple. Ce moyen de guidage 30 comprend un moyen de liaison 35 prolongeant la ferrure 20, ce moyen de liaison 35 étant articulé à l'axe de rotation AX.

La ferrure 20 étant munie d'une base comportant le pion du moyen d'immobilisation 50 et de deux joues 21, 22, le moyen de liaison 35 peut posséder deux bras 36, 37 prolongeant respectivement les joues 21, 22, ces bras étant soudés aux joues ou constituant une seule et même pièce avec lesdites joues par exemple. Chaque bras est alors d'une part solidaire d'une joue et d'autre part articulé à l'axe de rotation AX.

En référence à la figure 7, pour permettre la rotation selon la flèche F de la ferrure 20, la paroi 4' comprend un orifice de passage 4'''. On note que cet orifice de passage peut être obturé par un voile pouvant être déchiré, ce voile participant alors à l'absorption d'énergie et empêchant à des éléments situés dans la case de train de traverser la paroi 4' par exemple.

Par suite, à partir du seuil prédéterminé, le moyen d'immobilisation 50 fusible rompt et libère la ferrure qui effectue une rotation autour de l'axe de rotation AX en étant guidée par le moyen de guidage 30. Durant sa rotation, la ferrure 20 exerce un effort sur le moyen d'absorption d'énergie 40 déformable. De plus, au niveau de la paroi 4, la ferrure 20 déchire le voile 200 pour continuer son déplacement rotatif.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, on peut envisager de remplacer les attaches 101, 102 présentées sur la variante de la figure 5 par des moyens déformables, voire par des sangles. De même, la sangle 103 peut alors être remplacée par un moyen déformable ou encore par un moyen de liaison usuel.

## Revendications

1. Système (10) à absorption d'énergie pourvu d'un amortisseur (11) s'étendant d'une première extrémité (12) apte à être liée à un balancier (5) d'un atterrisseur (3) logé dans une case de train (4) vers une deuxième extrémité (13),
et comportant une ferrure (20) reliée à ladite deuxième extrémité (13) **caractérisé en ce qu'**il comporte, un moyen de guidage (30) de ladite ferrure (20), ledit système (10) comprenant un moyen d'absorption d'énergie (40) déformable fixé à ladite ferrure (20) et apte à être fixé à une structure (4") de ladite case (4) ainsi qu'un moyen d'immobilisation (50) fusible apte à fixer ladite ferrure (20) à un flanc (4") de ladite case, ledit moyen d'immobilisation (50) fusible se rompant à partir d'un seuil prédéterminé pour autoriser un déplacement de ladite ferrure (20) guidé par ledit moyen de guidage (30) pour engendrer une déformation dudit moyen d'absorption d'énergie (40).

2. Système selon la revendication 1,
**caractérisé en ce que**, ledit moyen de guidage (30) comporte deux glissières (31, 32) coopérant avec un rail mobile (26) de la ferrure (20).

3. Système selon la revendication 1,
**caractérisé en ce que** ledit moyen de guidage (30) comporte un rail fixe (33) en forme de T apte à être fixé audit flanc (4") coopérant avec une glissière (27) de ladite ferrure (20).

4. Système selon la revendication 3,
**caractérisé en ce que** ledit moyen d'immobilisation (50) est fixé d'une part à ladite ferrure (20) et d'autre part audit rail fixe (33).

5. Système selon l'une quelconque des revendications 1 à 2,
**caractérisé en ce que** ledit moyen d'immobilisation (50) est fixé d'une part à ladite ferrure (20) et d'autre part audit flanc (4").

6. Système selon la revendication 1,
**caractérisé en ce que** ledit moyen de guidage comprend un moyen de liaison (35) prolongeant la ferrure (20), ce moyen de liaison étant articulé à un axe de rotation qui est apte à être lié audit balancier, ledit moyen d'immobilisation (50) étant fixé d'une part à ladite ferrure (20) et d'autre part audit flanc (4").

7. Système selon l'une quelconque des revendications précédentes,
**caractérisé en ce que** ladite ferrure (20) comportant deux joues de fixation (21, 22), ladite deuxième extrémité (13) est disposée entre lesdites joues (21, 22), un axe de fixation (23) traversant lesdites joues (21, 22) et ladite deuxième extrémité (13).

8. Système selon la revendication 7,
**caractérisé en ce que** ledit moyen d'absorption d'énergie (40) déformable est fixé audit axe de fixation (23).

9. Système selon l'une quelconque des revendications précédentes,
**caractérisé en ce que** ledit moyen d'absorption d'énergie (40) déformable comporte au moins une sangle (41).

10. Système selon la revendication 9,
**caractérisé en ce que** ladite sangle (41) a une forme de Y en comprenant une branche inférieure (42) apte à être fixée à ladite structure (4") et deux branches supérieures (43, 44) fixées à ladite ferrure (20).

11. Aéronef (1) muni d'un train d'atterrissage (2) comportant au moins atterrisseur (3) disposé dans une case (4) de train, ledit atterrisseur (3) ayant un balancier (5) articulé à une paroi (4') de la case (4) de train et supportant au moins un organe de contact (6), ledit atterrisseur (3) ayant un système (10) à absorption d'énergie pourvu d'un amortisseur (11) s'étendant d'une première extrémité (12) liée audit balancier (5) vers une deuxième extrémité (13),
**caractérisé en ce que** ledit système (10) est selon l'une quelconque des revendications précédentes.

## Claims

1. Energy absorption system (10) provided with a shock absorber (11) extending from a first end (12) suitable for being connected to a rocker arm (5) of an undercarriage (3) housed in a wheel bay (4) towards a second end (13), and comprising a fitting (20) connected to said second end (13),
**characterised in that** it comprises a guide means (30) for guiding said fitting (20), said system (10) comprising a deformable energy absorption means (40) fastened to said fitting (20) and suitable for being fastened to a structure (4") of said bay (4) and also a fusible immobilising means (50) suitable for fastening said fitting (20) to a flank (4") of said bay, said fusible immobilising means (50) rupturing from a predetermined threshold in order to allow said fitting (20) to move under guidance from said guide means (30) so as to produce a deformation of said energy absorption means (40).

2. System according to Claim 1,
**characterised in that** said guide means (30) comprises two slides (31, 32) co-operating with a movable rail (26) of the fitting (20).

3. System according to Claim 1,
**characterised in that** said guide means (30) comprises a T-shaped fixed rail suitable for being fastened to said flank (4") co-operating with a slide (27) of said fitting (20).

4. System according to Claim 3,
**characterised in that** said immobilising means (50) is fastened, on the one hand, to said fitting (20) and, on the other hand, to said fixed rail (33).

5. System according to either one of Claims 1 to 2,
**characterised in that** said immobilising means (50) is fastened, on the one hand, to said fitting (20) and, on the other hand, to said flank (4").

6. System according to Claim 1,
**characterised in that** said guide means comprises a connection means (35) extending the fitting (20), said connection means being hinged to a pivot pin which is suitable for being connected to said rocker arm, said immobilising means (50) being fastened, on the one hand, to said fitting (20) and, on the other hand, to said flank (4").

7. System according to any one of the preceding claims,
**characterised in that** said fitting (20) has two fastening cheeks (21, 22), and said second end (13) is located between said cheeks (21, 22), a fastening pin (23) passing through said cheeks (21, 22) and said second end (13).

8. System according to Claim 7,
**characterised in that** said deformable energy absorption means (40) is fastened to said fastening pin (23).

9. System according to any one of the preceding claims,
**characterised in that** said deformable energy absorption means (40) comprises at least one strap (41).

10. System according to Claim 9,
**characterised in that** said strap (41) is Y-shaped, comprising a bottom branch (42) suitable for being fastened to said structure (4") and two top branches (43, 44) fastened to said fitting (20).

11. Aircraft (1) provided with landing gear (2) comprising at least one undercarriage (3) located in a wheel bay (4), said undercarriage (3) having a rocker arm (5) hinged to a wall (4') of the wheel bay (4) and supporting at least one contact member (6), said undercarriage (3) having an energy absorption system (10) provided with a shock absorber (11) extending from a first end (12) connected to said rocker arm (5) towards a second end (13),
**characterised in that** said system (10) is according to any one of the preceding claims.

## Patentansprüche

1. System (10) zur Energieabsorption, das mit einem Stoßdämpfer (11) versehen ist, der sich von einem ersten Ende (12), das mit einer Schwinge (5) eines Fahrwerks (3) verbunden werden kann, das in einem Fahrwerksgehäuse (4) vorgesehen ist, zu einem zweiten Ende (13) erstreckt und der einen Beschlag (20) aufweist, der mit dem zweiten Ende (13) verbunden ist,
**dadurch gekennzeichnet, dass** es mit einer Führungseinrichtung (30) für den Beschlag (20) ausgestattet ist, wobei das System (10) eine verformbare Einrichtung (40) zur Energieabsorption aufweist, die an dem Beschlag (20) befestigt und zur Befestigung an einem Bauteil (4") des Fahrwerksgehäuses (4) geeignet ist, sowie eine fixierende Sicherungseinrichtung (50) aufweist, die dazu geeignet ist, den Beschlag (20) an einer Seitenwand (4") des Fahrwerksgehäuses zu fixieren, wobei sich die fixierende Sicherungseinrichtung (50) ab einem vorgegebenen Schwellenwert löst und eine Verschiebung des Beschlags (20) erlaubt, der durch die Führungseinrichtung (30) geführt wird, um eine Verformung der Einrichtung (40) zur Energieabsorption zu bewirken.

2. System nach Anspruch 1,
**dadurch gekennzeichnet, dass** die Führungseinrichtung (30) zwei Gleitschienen (31, 32) aufweist, die mit einem beweglichen Schlitten (26) des Beschlags (20) zusammenwirken.

3. System nach Anspruch 1,
**dadurch gekennzeichnet, dass** die Führungseinrichtung (30) eine feste, T-förmige Schiene (33) aufweist, die an der Seitenwand (4") befestigt werden kann und mit einer Gleitschiene (27) des Beschlags (20) zusammenwirkt.

4. System nach Anspruch 3,
**dadurch gekennzeichnet, dass** die fixierende Sicherungseinrichtung (50) einerseits am Beschlag (20) und andererseits an der festen Schiene (33) fixiert ist.

5. System nach Anspruch 1 oder 2,
**dadurch gekennzeichnet, dass** die fixierende Sicherungseinrichtung (50) einerseits am Beschlag (20) und andererseits an der Seitenwand (4") fixiert ist.

6. System nach Anspruch 1,
**dadurch gekennzeichnet, dass** die Führungseinrichtung eine Verbindungseinrichtung (35) aufweist, die sich über den Beschlag (20) hinaus erstreckt, wobei diese Verbindungseinrichtung an einer Drehachse angelenkt ist, die mit der Schwinge verbindbar ist, wobei die Sicherungseinrichtung (50) einerseits an dem Beschlag (20) und andererseits an der Seitenwand (4") befestigt ist.

7. System nach einem der vorhergehenden Ansprüche,
**dadurch gekennzeichnet, dass** der Beschlag (20) zwei Befestigungswangen (21, 22) aufweist, wobei das zweite Ende (13) zwischen den Befestigungswangen (21, 22) angeordnet ist und eine Befestigungsachse (23) durch die Befestigungswangen (21, 22) und das zweite Ende (13) hindurchgeht.

8. System nach Anspruch 7,
**dadurch gekennzeichnet, dass** die verformbare Einrichtung (40) zur Energieabsorption an der Befestigungsachse (23) befestigt ist.

9. System nach einem der vorhergehenden Ansprüche,
**dadurch gekennzeichnet, dass** die verformbare Einrichtung (40) zur Energieabsorption mindestens eine Spanneinrichtung (41) aufweist.

10. System nach Anspruch 9,
**dadurch gekennzeichnet, dass** die Spanneinrichtung (41) die Form eines Y aufweist, das einen unteren Arm (42), der am Bauteil (4") befestigt werden kann, und zwei obere Arme (43, 44) besitzt, die an dem Beschlag (20) befestigt sind.

11. Luftfahrzeug (1), das mit einer Fahrwerksanlage (2) ausgerüstet ist, die mindestens ein Fahrwerk (3) aufweist, das in einem Fahrwerksgehäuse (4) vorgesehen ist, wobei das Fahrwerk (3) eine Schwinge (5) aufweist, die an einer Wand (4') des Fahrwerksgehäuses (4) angelenkt ist und mindestens ein Kontaktorgan (6) trägt, wobei das Fahrwerk (3) ein System (10) zur Energieabsorption aufweist, das mit einem Stoßdämpfer (11) versehen ist, der sich von einem ersten Ende (12), das mit der Schwinge (5) verbunden ist, zu einem zweiten Ende (13) erstreckt, **dadurch gekennzeichnet, dass** das System (10) ein System nach einem der vorhergehenden Ansprüche ist.
